# EUROPÄISCHE PATENTSCHRIFT

(11) **EP 2 026 890 B1**
(45) Veröffentlichungstag und Bekanntmachung des Hinweises auf die Patenterteilung: **22.02.2012**
(21) Anmeldenummer: 07723853.3
(22) Anmeldetag: 31.03.2007
(51) Int. Cl.: B01D 36/00, F02M 37/00, F02M 37/22, B01D 17/06

(54) **VERFAHREN UND VORRICHTUNG ZUM ABSCHEIDEN UND ABFÜHREN VON IN FLÜSSIGEN KRAFTSTOFFEN ENTHALTENEM WASSER, INSBESONDERE VON WASSER AUS DIESELÖL**
PROCESS AND APPARATUS FOR SEPARATING OUT AND REMOVING WATER PRESENT IN LIQUID FUELS, ESPECIALLY WATER FROM DIESEL OIL
PROCÉDÉ ET DISPOSITIF DE SÉPARATION ET DE DÉCHARGEMENT D'EAU CONTENUE DANS DES CARBURANTS LIQUIDES, NOTAMMENT DU GAZOLE

(30) Priorität: 23.05.2006 DE 102006024013
(43) Veröffentlichungstag der Anmeldung: 25.02.2009
(73) Patentinhaber: HYDAC FILTERTECHNIK GMBH, 66280 Sulzbach (DE)
(72) Erfinder: LAUER, Viktor, 66809 Nalbach (DE); HAGER, Martin, 66809 Nalbach (DE)
(74) Vertreter: Bartels, Martin Erich Arthur
(86) Internationale Anmeldenummer: PCT/EP2007/002912
(87) Internationale Veröffentlichungsnummer: WO 2007/134667

(56) Entgegenhaltungen:
- WO-A-2005/088114
- DE-A1- 19 847 999
- DE-A1-102004 042 245
- GB-A- 2 129 329
- US-A- 4 539 109

## Beschreibung

Die Erfindung bezieht sich auf ein Verfahren zum Abscheiden und Abführen von in flüssigen Kraftstoffen enthaltenem Wasser, insbesondere von Wasser aus Dieselöl gemäß der Merkmalsausgestaltung des Oberbegriffs des Patentanspruches 1. Außerdem bezieht sich die Erfindung auf eine Vorrichtung zum Durchführen eines solchen Verfahrens gemäß der Merkmalsausgestaltung des Oberbegriffes des Patentanspruches 4.

Das Ablassen von Wasser ist allgemein üblich und insbesondere dann unumgänglich, wenn schwere Dieselmaschinen unter rauhen Einsatzbedingungen betrieben werden. So ist es beispielsweise bei einem Einsatz von Arbeitsmaschinen mit schweren Dieselmotoren in weniger hoch entwickelten Ländern schwierig, Kraftstoff von mitteleuropäischer Qualität zu erhalten. Vielmehr muss in Ländern mit schwierigen klimatischen Bedingungen und schlechter Infrastruktur damit gerechnet werden, dass der erhältliche Kraftstoff starke Verunreinigungen, insbesondere einen hohen Wassergehalt, aufweist. So werden oftmals Bau- und Landmaschinen aus Fässern betankt, die des öfteren nur mit geringer oder gar ohne jegliche Abdeckung gelagert und transportiert werden, so dass sie einwirkenden Witterungsbedingungen, beispielsweise Regen, ungeschützt ausgesetzt sind. Erfahrungsgemäß kann von einem maximalen Wasseranteil in Dieselöl von bis zu 10% ausgegangen werden, wobei auch Vandalismus und korrupte Handlungsweisen Ursachen für diese hohen Wassergehalte sein können.

Wenn ein stark verunreinigtes Dieselöl beispielsweise im Tank eines leistungsstarken Common-Rail-Dieselmotors mit einem Verbrauch von ca. 400 l/Tag benutzt wird, so beträgt die Menge des abzulassenden Wassers knapp 40l/Tag. Bei handelsüblichen Filter/Wasserabscheidern beträgt jedoch das Fassungsvermögen im Wassersammelbehälter höchsten 0,5 l. Angesichts dieses Standes der Technik bedeutet dies, dass der Fahrer, um das eingangs erwähnte, übliche Ablassverfahren durchzuführen, während eines Arbeitstages rund 80 Mal den Motor abstellen muss, um die einem Abfließen des Wassers aus der betreffenden Filteranordnung entgegenwirkende Saugkraft der Kraftstoffförderpumpe zu unterbinden, wonach die Bedienungsperson die Abflussöffnung des Wasser-Sammelraums öffnen muß, um das angesammelte Wasser abfließen zu lassen. Falls die Bedienungsperson den Erfordernissen nicht Rechnung trägt, kommt es nach einiger Zeit zu einem Durchschlagen von Wasser durch die Filteranordnung hindurch zum Einspritzsystem und damit zu dessen Beschädigung, wodurch sehr hohe Instandsetzungskosten und ein entsprechend langer Ausfall des betreffenden Gerätes verursacht werden.

Durch die WO-A-2005/088114 ist ein gattungsgemäßes Verfahren zum Abscheiden und Abführen von in Dieselöl enthaltenem Wasser offenbart, wobei der Kraftstoff in einem zur Versorgung einer Verbrennungsmaschine dienenden Leitungssystem durch eine Kraftstoffförderpumpe gefördert wird, wobei Wasser an einer Filteranordnung abgeschieden wird, die einen Sammelraum zum Ansammeln abgeschiedenen Wassers aufweist und der Saugseite einer Kraftstoffförderpumpe vorgeschaltet ist, so dass deren Saugwirkung einem Abfließen von Wasser aus dem Sammelraum entgegenwirkt, und wobei in Abhängigkeit von der Ansammlung einer vorgegebenen Menge Wassers die Saugwirkung der Förderpumpe durch ein Ablassmittel unterbunden und ein an einer Abflussöffnung des Sammelraumes befindliches Ablassventil zum Abführen von Wasser geöffnet wird und über einen Ablasszeitraum hinweg und bei laufendem Betrieb der Kraftstoffförderpumpe an der Abflussöffnung des Sammelraumes ein das Abfließen von Wasser ermöglichender Druckgradient erzeugt wird.

Des weiteren ist durch die genannte Schrift eine gattungsgemäße Vorrichtung zum Durchführen des vorstehend beschriebenen Verfahrens offenbart, mit einer Filteranordnung mit Wasserabscheider, deren Eingang mit einem Kraftstofftank und deren Ausgang mit der Saugseite einer Kraftstoffförderpumpe im Kraftstoffversorgungs-Leitungssystem einer Verbrennungsmaschine verbunden ist. Dabei weist die bekannte Filteranordnung einen Sammelraum zum Ansammeln abgeschiedenen Wassers auf, das durch eine Abflussöffnung des Sammelraumes abgebbar ist. Des weiteren ist ein Ablassmittel in Form einer sogenannten Ablasspumpe vorhanden, das eine Drucksteuereinrichtung umfasst, mit dem über einen Ablasszeitraum hinweg an der Abflussöffnung ein Druckgradient erzeugbar ist, der entgegen der an der Filteranordnung vorhandenen Saugwirkung der laufenden Kraftstoffförderpumpe ein Abfließen von Wasser ermöglicht.

Ähnlich oder vergleichbar aufgebaute Vorrichtungen nebst den zugeordneten Wasserabscheideverfahren sind auch Gegenstand der DE-A-198 47 999, der GB-A-2 129 329 A sowie der DE-A-10 2004 042 245.

Im Hinblick auf diesen Stand der Technik stellt sich die Erfindung die Aufgabe, ein Verfahren nebst Vorrichtung anzugeben, die den Anforderungen, die sich beim Betrieb von Verbrennungskraftmaschinen, insbesondere von schweren Dieselmotoren, ergeben, in besonders gutem Maße gerecht werden.

Ausgehend von dem üblichen Verfahren der gattungsgemäßen Art ist diese Aufgabe erfindungsgemäß dadurch gelöst, dass das Ablassmittel einen hydropneumatischen Druckspeicher, dessen Ölseite durch die Kraftstoffförderpumpe mit Kraftstoff geladen wird, sowie eine Ventileinrichtung aufweist, die durch die Steuerelektronik derart betätigbar ist, dass mittels des Druckspeichers in der Filteranordnung ein Druck aufgebaut wird, der an der Abflussöffnung den zum Abfließen des Wassers nötigen Druckgradienten erzeugt. Bei diesem Verfahren ergibt sich im Sinne des reduzierten Bauteileaufwands der Vorteil, dass keine zusätzliche Ablasspumpe erforderlich ist.

Dadurch, dass ein Ablassvorgang dadurch eingeleitet wird, dass zwischen Innenseite des Sammelraumes und der Außenseite eine Druckdifferenz erzeugt wird, die einen Wasseraustritt über die Abflussöffnung bewirkt, ermöglicht das erfindungsgemäße Verfahren die Durchführung von Ablassvorgängen bei laufendem Motor. Ohne Betriebsstörungen lassen sich daher Ablassvorgänge in verhältnismäßig rascher Aufeinanderfolge, und damit über verhältnismäßig kurze Ablasszeiträume hinweg, durchführen, während denen das Einspritzsystem bei fortlaufender Kraftstoffförderpumpe mit dem Vorratsvolumen der Einspritzanlage weiter arbeitet, also keine Stillsetzung des Motors erforderlich ist.

Das erfindungsgemäße Verfahren eröffnet die Möglichkeit der vollständigen Automatisierung. In besonders vorteilhafter Weise kann hierbei vorgesehen sein, dass durch eine die Ansammlung der vorgegebenen Menge des Wassers sowie deren Abfließen erkennende Wasser-Sensoreinrichtung ein Signal erzeugt wird, welches das Ablassmittel aktiviert und dadurch selbsttätig einen Ablassvorgang einleitet. Die Gefahr, dass es durch eine Fehlleistung des Bedienpersonals zum Wasserdurchschlag kommen kann ist daher vermieden.

Bei besonders vorteilhaften Ausführungsbeispielen weist das Ablassmittel eine Steuerelektronik auf, die das Signal der Wasser-Sensoreinrichtung verarbeitet, um Ablässzeiträume zu ermitteln und Steuersignale für das Aktivieren des Ablassmittels und die Steuerung des Ablassventils während der ermittelten Ablasszeiträume zu erzeugen.

In vorteilhafter Weise kann durch die Steuerelektronik in Abhängigkeit vom Signal eines die Temperatur des abgeschiedenen Wasser erkennenden Temperatursensors ein Heizungs-Steuersignal für ein als Gefrierschutz vorgesehenes Heizelement erzeugt werden. Dadurch ist Betriebssicherheit auch im Winterbetrieb oder in kalten Klimazonen gewährleistet.

Gegenstand der Erfindung ist auch eine Vorrichtung zum Durchführen des erfindungsgemäßen Verfahrens, welche die Merkmal des Patentanspruches 4 in seiner Gesamtheit aufweist.

Weitere Merkmale der erfindungsgemäßen Vorrichtung sind in den Ansprüchen 5 bis 8 angegeben.

Nachstehend ist die Erfindung anhand von in der Zeichnung dargestellten Ausführungsbeispielen im Einzelnen erläutert. Es zeigen:

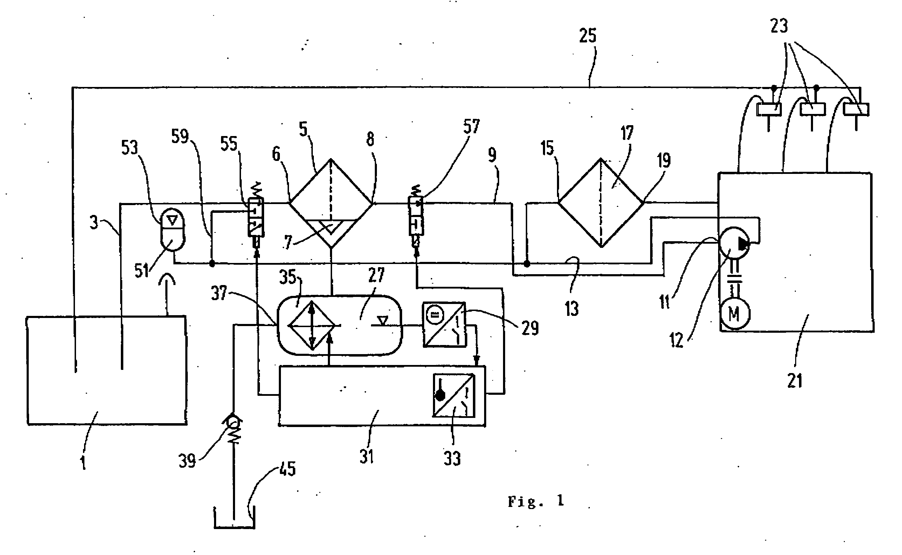

- Fig. 1 ein vereinfacht gezeichnetes Schaltschema zur Verdeutlichung der Erfindung;
- Fig. 2 eine teilweise im Längsschnitt und schematisch vereinfacht gezeichnete Darstellung eines Ausführungsbeispieles der erfindungsgemäßen Vorrichtung zur Durchführung des in Fig. 1 gezeigten Beispieles des Verfahrens.

Zur Verdeutlichung des Ausführungsbeispieles der Erfindung zeigt die Figur ein schematisiertes Blockschaltbild des Kraftsstoffversorgungssystems eines Dieselmotors mit Common-Rail-Einspritzung. Ausgehend von einem Kraftstofftank 1 weist das Leitungssystem eine Tankleitung 3 auf, die zu einem Eingang 6 eines Vorfilters 5 führt. Der Vorfilter 5 mit einer Feinheit von etwa 30 µ weist einen Wasserabscheider 7 auf. An den Ausgang 8 des Vorfilters 5 schließt sich eine Saugleitung 9 an, die zur Saugseite 11 einer Kraftstoffförderpumpe 12 führt. Deren Druckleitung 13 ist mit dem Eingang 15 eines Feinfilters 17 verbunden, der eine Feinheit von etwa 2 - 5 µ besitzt. Der Ausgang 19 des Feinfilters 17 ist mit einem Common-Rail-Einspritzsystem 21 verbunden, wobei von dessen mit 23 bezeichneten Einspritzdüsen eine Rezirkulationsleitung 25 zum Tank 1 zurück führt.

Wasser, das aus dem den Vorfilter 5 durchströmenden Kraftstoff mittels des Wasserabscheiders 7 abgesondert wird, sammelt sich im Bodenbereich des Vorfilters 5 und dem sich an dessen Unterseite anschließenden Sammelraum 27 an. Eine Wasser-Sensoreinrichtung 29, die die Pegelhöhe angesammelten Wassers im Sammelraum 27 erkennt, steht in Signalverbindung mit einer Steuerelektronik 31. Diese verarbeitet nicht nur die Signale der Wasser-Sonsoreinrichtung 29 sondern auch eines Temperaturfühlers 33, der bei ermittelter Gefriertemperatur ein Heizelement 35 als Gefrierschutz im Sammelraum 27 aktiviert.

Der Sammelraum 27 ist über seine Abflussöffnung 37 und über ein Rückschlagventil 39 als Ablassventil mit einem Auffangbehälter 45 für abgelassenes Wasser verbunden.

Wenn die Wasser-Sensoreinrichtung 29 einen einer vorgegebenen Menge angesammelten Wassers entsprechenden Pegelstand im Sammelbehälter 27 erkennt und dies der Steuerelektronik 31 signalisiert, wird ein entsprechender Ablassvorgang eingeleitet.

Wie aus der Figur weiter zu ersehen ist, führt die Druckleitung 13 zur Ölseite 51 eines Membranspeichers 53, der durch die in Betrieb befindliche Kraftstoffförderpumpe 12 mit Kraftstoff geladen wird. Um einen Ablassvorgang einzuleiten, was durch Signalgabe der Sensoreinrichtung 29 und die hieraus resultierende Tätigkeit der Steuerelektronik 31 erfolgt, werden ein 3/2 Wegeventil 55, das in der Tankleitung 3 dem Eingang 6 des Vorfilters 5 vorgeschaltet ist, sowie ein 2/2 Wegeventil 57, das dem Ausgang 8 des Vorfilters 5 nachgeschaltet ist, betätigt. Hierbei wird über den Ablasszeitraum hinweg das Ventil 57 geschlossen und das Ventil 55 so betätigt, dass die Tankleitung 3 gesperrt und der Ölraum 51 des Membranspeichers 53 über die Zweigleitung 59 und das 3/2 Wegeventil 55 mit dem Eingang 6 des Vorfilters 5 verbunden wird.

Durch das dem Vorfilter 5 über den Membranspeicher 53 zugeführte, unter Druck stehende Ölvolumen ergibt sich an der Abflussöffnung 37 des Sammelraumes 27 der Druckgradient, der angesammeltes Wasser aus dem Sammelraum 27 herausdrückt, welches wiederum zum Auffangbehälter 45 gelangt. Der Ausgang 8 des Vorfilters 5 ist während des Ablasszeitraumes durch das Ventil 57 sperrbar. Wenn der Membranspeicher 53 mit ausreichendem Druck geladen wird und im Ölraum 51 ein ausreichend großes Druckölvolumen zur Verfügung steht, das über das Ventil 55 in den Vorfilter 5 einströmt, so dass sich im Vorfilter 5 während des Ablasszeitraumes ein ausreichender Druckanstieg ergibt, kann das 2/2 Wegeventil weggelassen werden. Während des Ablasszeitraumes kann die Kraftstoffförderpumpe 12 weiter arbeiten, d. h. der Motor braucht nicht abgestellt zu werden. Bei Beendigen des Ablasszeitraumes wird das Ventil 55 gegebenenfalls das Ventil 57 wieder so gesteuert, dass Tankleitung 3 und Saugleitung 9 durchströmbar sind, die Zweigleitung 59 wieder gesperrt ist und der Membranspeicher 53 wieder über die Druckleitung 13 geladen wird.

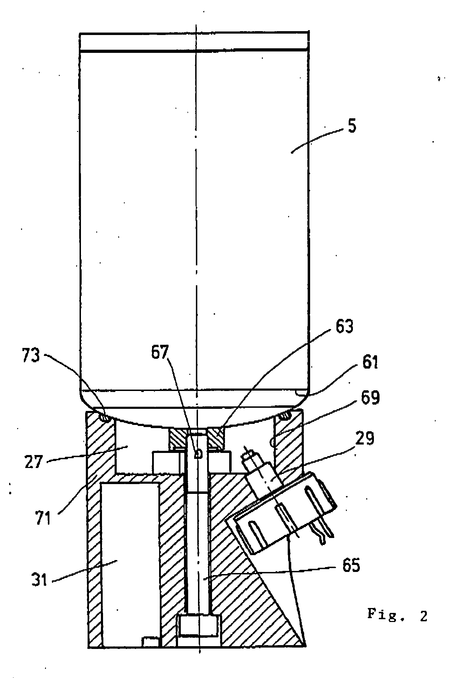

Fig. 2 zeigt ein Beispiel der erfindungsgemäßen Vorrichtung zum Durchführen des Verfahrens, wobei die Vorrichtung als Nachrüstsystem ausgebildet ist, das nachträglich an der Unterseite 61 des Vorfilters 5 anbringbar ist, dessen Filtertopf in der Art eines Spin-on-Filters gestaltet ist.

Wie Fig. 2 zeigt, befindet sich im Zentralbereich des Bodens an der Unterseite 61 ein Wasserauslass 63 mit Innengewinde, mit dem eine Hohlschraube 65 verschraubt ist, deren innere Bohrungen 67 eine Fluidverbindung zwischen Bodenbereich an der Unterseite 61 des Filtertopfes und einer zentralen Mulde 69 bilden, die sich am oberen Ende eines Körpers 71 befindet, der durch die Hohlschraube 65 an der Unterseite 61 des Filtertopfes festgespannt ist, wobei ein Dichtring 73 eine randseitige Abdichtung bildet.

Die Mulde 69 bildet den Wasser-Sammelraum 27 für das durch den Wasserabscheider 7 des Vorfilters 5 abgeschiedene Wasser, dessen Pegelhöhe im Sammelraum 27 durch die Wasser-Sensoreinrichtung 29 erkannt wird. Unterhalb der den Sammelraum 27 bildenden Mulde 69 befinden sich im Körper 71 Hohlräume zur Aufnahme der Steuerelektronik 31, sowie weiterer, nicht gezeigter Komponenten.

Die erfindungsgemäße Vorrichtung kann als Nachrüstsystem gestaltet sein, das für einen nachträglichen Einbau in bestehende Anlagen geeignet ist; es versteht sich aber auch, dass die Erfindung in besonderem Maße auch als Erstausrüstung bei betreffenden Anlagen geeignet ist.

## Patentansprüche

1. Verfahren zum Abscheiden und Abführen von in flüssigen Kraftstoffen enthaltenem Wasser, insbesondere von Wasser aus Dieselöl, wobei der Kraftstoff in einem zur Versorgung einer Verbrennungsmaschine dienenden Leitungssystem (3, 9, 13) durch eine Kraftstoffförderpumpe (12) gefördert wird, wobei Wasser an einer Filteranordnung (5) abgeschieden wird, die einen Sammelraum (27) zum Ansammeln abgeschiedenen Wassers aufweist und der Saugseite (11) der Kraftstoffförderpumpe (12) vorgeschaltet ist, so dass deren Saugwirkung einem Abfließen von Wasser aus dem Sammelraum (27) entgegenwirkt, wobei in Abhängigkeit von der Ansammlung einer vorgegebenen Menge Wassers die Saugwirkung der Förderpumpe (12) unterbunden und ein an einer Abflussöffnung (37) des Sammelraumes (27) befindliches Ablassventil zum Abführen von Wasser geöffnet wird, wobei die dem Abfließen von Wasser entgegenwirkende Saugwirkung durch ein Ablassmittel (53) unterbunden wird, durch das über einen Ablasszeitraum hinweg und bei laufendem Betrieb der Kraftstoffförderpumpe (12) an der Abflussöffnung (37) des Sammelraumes (27) ein das Abfließen von Wasser ermöglichender Druckgradient erzeugt wird, und wobei das Ablassmittel (53) eine Steuerelektronik (31) aufweist, die das Signal einer die Ansammlung der vorgegebenen Menge Wassers sowie deren Abflieβen erkennende Wasser-Sensoreinrichtung (29) verarbeitet, um Ablasszeiträume zu ermitteln und Steuersignale für das Aktivieren des Ablassmittels (53) und die Steuerung des Ablassventils während der ermittelten Zeiträume zu erzeugen, **dadurch gekennzeichnet, dass** das Ablassmittel einen hydropneumatischen Druckspeicher (53), dessen Ölseite (51) durch die Kraftstoffförderpumpe (12) mit Kraftstoff geladen wird, sowie eine Ventileinrichtung (55, 57) aufweist, die durch die Steuerelektronik (31) derart betätigbar ist, dass mittels des Druckspeichers (53) in der Filter-anordnung (5) ein Druck aufgebaut wird, der an der Abflussöffnung (37) den zum Abfließen des Wassers nötigen Druckgradienten erzeugt.

2. Verfahren nach Anspruch 1, **dadurch gekennzeichnet, dass** die Steuerelektronik (31) in Abhängigkeit vom Signal eines die Temperatur des abgeschiedenen Wassers erkennenden Temperatursensors (33) ein Heizungs-Steuersignal für ein als Gefrierschutz vorgesehenes Heizelement (35) erzeugt.

3. Vorrichtung zum Durchführen des Verfahrens nach einem der Ansprüche 1 und 2, mit einer einen Wasserabscheider (7) aufweisenden Filteranordnung (5), deren Eingang (6) mit einem Kraftstofftank (1) und deren Ausgang (8) mit der Saugseite (11) einer Kraftstoffförderpumpe (12) im Kraftstoffversorgungs-Leitungssystem einer Verbrennungsmaschine verbunden ist, wobei die Filteranordnung (5) einen Sammelraum (27) zum Ansammeln abgeschiedenen Wassers aufweist, das durch eine Abflussöffnung (37) des Sammelraumes (27) abgebbar ist, wobei ein Ablassmittel vorhanden ist, das eine Drucksteuereinrichtung (53) umfasst, mittels deren über einen Ablasszeitraum hinweg an der Abflussöffnung (37) ein Druckgradient erzeugbar ist, der entgegen der an der Filteranordnung (5) vorhandenen Saugwirkung der laufenden Kraftstoffförderpumpe (12) ein Abfließen von Wasser ermöglicht, wobei eine die Ansammlung der vorgegebenen Menge des Wassers erkennende Wasser-Sensoreinrichtung (29) und eine Sensorsignale der Sensoreinrichtung verarbeitende Steuerelektronik (31) vorhanden sind, die Steuersignale für das Ablassmittel und für die Steuerung einer deren Drucksteuereinrichtung (53) zugehörigen Ventileinrichtung erzeugt, **dadurch gekennzeichnet, dass** die Drucksteuereinrichtung einen hydropneumatischen Druckspeicher, insbesondere Membranspeicher (53), aufweist, dessen Ölseite (51) mit der Druckseite der Kraftstoffförderpumpe (12) verbunden und über ein durch die Steuerelektronik steuerbares Ventil (55) der Ventileinrichtung mit dem Eingang (6) der Filteranordnung (5) verbindbar ist.

4. Vorrichtung nach Anspruch 3, **dadurch gekennzeichnet, dass** das Ventil (55) ein 3/2 Wegeventil ist, über das der Eingang (6) der Filteranordnung (5) wechselweise mit dem Druckspeicher (53) oder dem Kraftstofftank (1) verbindbar ist.

5. Vorrichtung nach Anspruch 3 oder 4, **dadurch gekennzeichnet, dass** sie als Nachrüstsystem ausgebildet ist, das an einer vorhandenen, einen Wasserabscheider (7) aufweisenden Filteranordnung (5) anbringbar ist.

6. Vorrichtung nach Anspruch 5, **dadurch gekennzeichnet, dass** bei einer Filteranordnung in Form eines Spin-on-Filterelementes (5), dessen Filtertopf einen bodenseitigen Wasserauslass (63) besitzt, das Nachrüstsystem einen am Boden (61) des Topfes anbringbaren Körper (71) aufweist, der einen den Wasserauslass (63) des Topfes umgebenden Hohlraum (69) aufweist, der einen Bestandteil des der Filteranordnung (5) zugehörigen Sammelraumes (27) bildet und die Abflussöffnung (37) für das Abfließen des Wassers aus dem Sammelraum (27) aufweist.

7. Vorrichtung nach Anspruch 6, **dadurch gekennzeichnet, dass** der Körper (71) am Topf durch eine mit dessen Wasserauslass (63) verschraubte Hohlschraube (65) festgelegt ist, die Bohrungen (67) zur Bildung eines Wasserdurchganges zu dem als Sammelraum (27) dienenden Hohlraum (69) aufweist.

## Claims

1. A process for separating out and removing water present in liquid fuels, especially water from diesel oil, the fuel being conveyed in a line system (3, 9, 13) which is used to supply an internal combustion engine by a fuel delivery pump (12), water being separated out at a filter arrangement (5) which has a collecting space (27) for collecting separated water, and being connected upstream from the suction side (11) of the fuel delivery pump (12) so that its sucking action counteracts an outflow of water from the collecting space (27), and depending on the collection of a given amount of water the sucking action of the delivery pump (21) being negated and a discharge valve located at an outflow opening (37) of the collecting space (27) for removing water being opened, the sucking action counteracting the outflow of water being negated by a discharge means (53) by which a pressure gradient which enables outflow of water is produced at the outflow opening (37) of the collecting space (27) over a discharge interval and during current operation of the fuel delivery pump (12), and the discharge means (53) having control electronics (31) which process the signal of a water sensor device (29) detecting the collection of the given amount of water and its outflow in order to determine discharge intervals and to produce control signals for activation of the discharge means (53) and control of the discharge valve during the determined time intervals, **characterised in that** the discharge means has a hydropneumatic accumulator (53), the oil side (51) of which is charged with fuel by the fuel delivery pump (12), and valve means (55, 57) which can be actuated by the control electronics (31) such that by means of the accumulator (53) in the filter arrangement (5) a pressure is built up which produces the pressure gradient which is necessary for the outflow of the water at the outflow opening (37).

2. The process according to Claim 1, **characterised in that** the control electronics (31) produce a heating control signal for a heating element (35) provided as protection against freezing depending on the signal of a temperature sensor (33) which detects the temperature of the separated water.

3. An apparatus for executing the process according to either of Claims 1 and 2, comprising a filter arrangement (5) which has a water separator (7) the inlet (6) of which is connected to a fuel tank (1) and the outlet (8) of which is connected to the suction side (11) of a fuel delivery pump (12) in the fuel supply line system of an internal combustion engine, the filter arrangement (5) having a collecting space (27) for collecting separated water which can be released through an outflow opening (37) of the collecting space (27), there being a discharge means comprising a pressure control means (53) by means of which over a discharge interval at the outflow opening (37) a pressure gradient can be produced which enables outflow of water against the sucking action of the running fuel delivery pump (12) on the filter arrangement, there being a water sensor device (29) detecting the collection of the given amount of water and control electronics (31) processing control signals of the sensor device which produce control signals for the discharge means and for control of a valve means which belongs to its pressure control means (53), **characterised in that** the pressure control means has a hydropneumatic accumulator, in particular a diaphragm accumulator (53) the oil side (51) of which is connected to the pressure side of the fuel delivery pump (12) and can be connected to the inlet (6) of the filter arrangement (5) by means of a valve (55) of the valve means which can be controlled by the control electronics.

4. The apparatus according to Claim 3, **characterised in that** the valve (55) is a 3/2-way valve via which the inlet (6) of the filter arrangement (5) can be connected alternately to the accumulator (53) or the fuel tank (1).

5. The apparatus according to Claim 3 or 4, **characterised in that** it is made as a retrofit system which can be attached to an existing filter arrangement (5) which has a water separator (7).

6. The apparatus according to Claim 5, **characterised in that** in a filter arrangement in the form of a spin-on filter element (5) the filter casing of which has a bottom-side water outlet (63) the retrofit system has a body (71) which can be attached to the bottom (61) of the casing and which has a cavity (69) surrounding the water outlet (63) of the casing and which forms a component of the collecting space (27) which belongs to the filter arrangement (5) and has the outflow opening (37) for the outflow of water from the collecting space (27).

7. The apparatus according to Claim 6, **characterised in that** the body (71) is fixed on the casing by a hollow screw (65) which is screwed to its water outlet (63) which has holes (67) for forming a water passage to the cavity (69) which is used as the collecting space (27).

## Revendications

1. Procédé de séparation et d'évacuation d'eau contenue dans des carburants liquides, notamment d'eau contenue dans du carburant diesel, dans lequel on véhicule le carburant par une pompe (12) de carburant dans un système (3, 9, 13) de canalisation servant à l'alimentation d'un moteur à combustion interne, dans lequel on sépare de l'eau sur un agencement (5) de filtration, qui comporte un espace (27) de collecte pour la collecte de l'eau séparée et qui est monté en amont du côté aspiration de la pompe (12) de carburant de manière à ce que son effet d'aspiration s'oppose à ce que de l'eau s'écoule hors de l'espace (27) de collecte, dans lequel, en fonction de l'accumulation d'une quantité prescrite d'eau, on supprime l'effet d'aspiration de la pompe (12) et on ouvre pour l'évacuation de l'eau une soupape d'évacuation se trouvant sur une ouverture (37) d'évacuation de l'espace (27) de collecte, dans lequel on supprime l'effet d'aspiration s'opposant à l'évacuation de l'eau par un moyen (53) de sortie, par lequel, pendant un laps de temps de sortie et alors que la pompe (12) de carburant est en service, il est produit, sur l'ouverture (37) d'évacuation de l'espace (27) de collecte, un gradient de pression permettant l'évacuation de l'eau et dans lequel le moyen (53) de sortie comprend une électronique (31) de commande, qui traite le signal d'un dispositif (29) capteur détectant l'accumulation de la quantité d'eau prescrite ainsi que son évacuation pour déterminer des laps de temps de sortie et produire des signaux de commande pour l'activation du moyen (53) de sortie et la commande de la soupape de sortie pendant les laps de temps déterminés, **caractérisé en ce que** le moyen de sortie comporte un accumulateur (53) de pression hydropneumatique, dont le côté (51) huile est chargé de carburant par la pompe (12) de carburant, ainsi qu'un dispositif (55, 57) de vanne, qui peut être actionné par l'électronique (31) de commande de manière à créer, au moyen de l'accumulateur (53) de pression, dans l'agencement (5) de filtration une pression qui produit sur l'ouverture (37) d'évacuation le gradient de pression nécessaire à l'évacuation de l'eau.

2. Procédé suivant la revendication 1, **caractérisé en ce que** l'électronique (31) de commande produit, en fonction d'un signal d'un capteur (33) de température détectant la température de l'eau séparée, un signal de commande de chauffage pour un élément (35) chauffant prévu en tant que protection vis-à-vis du gel.

3. Dispositif pour la mise en oeuvre du procédé suivant l'une des revendications 1 et 2, comprenant un agencement (5) de filtration, qui comporte un séparateur (7) d'eau et dont l'entrée communique avec une cuve (1) à carburant et dont la sortie communique avec le côté (11) aspiration d'une pompe (12) de carburant dans le système de canalisation d'alimentation en carburant d'un moteur à combustion interne, l'agencement (5) de filtration ayant un espace (27) de collecte pour l'accumulation d'eau séparée, qui peut sortir par une ouverture (37) d'évacuation de l'espace (27) de collecte, un moyen de sortie étant présent, lequel comprend un dispositif (53) de commande de la pression, au moyen duquel, sur un laps de temps de sortie, il peut être produit sur l'ouverture (37) d'évacuation un gradient de pression, qui rend possible, à l'encontre de l'effet d'aspiration, présent sur l'agencement (5) de filtration, de la pompe (12) de carburant en service, une évacuation d'eau, un dispositif (29) capteur d'eau reconnaissant l'accumulation de la quantité prescrite d'eau et une électronique (31) de commande traitant des signaux du dispositif capteur étant présents, l'électronique produisant des signaux de commande du moyen de sortie et de commande d'un dispositif de vanne associé au dispositif (53) de commande de la pression, **caractérisé en ce que** le dispositif de commande de la pression comporte un accumulateur de pression hydropneumatique, notamment un accumulateur (53) à membrane, dont le côté (51) huile communique avec le côté refoulement de la pompe (12) de carburant et qui peut communiquer avec l'entrée (6) de l'agencement (5) de filtration par une vanne (55), pouvant être commandée par l'électronique de commande, du dispositif de vanne.

4. Dispositif suivant la revendication 3, **caractérisé en ce que** la vanne (55) est une vanne à 3/2 voies, par laquelle l'entrée (6) de l'agencement (5) de filtration peut communiquer en alternance avec l'accumulateur (53) de pression ou avec la cuve (1) à carburant.

5. Dispositif suivant la revendication 3 ou 4, **caractérisé en ce qu'**il est constitué en système d'équipement ultérieur, qui peut être mis sur un agencement (5) de filtration existant ayant un séparateur (7) d'eau.

6. Dispositif suivant la revendication 5, **caractérisé en ce que**, dans le cas d'un agencement de filtration sous la forme d'un élément (5) filtrant spin-on, dont le pot formant filtre possède une sortie (63) d'eau du côté du fond, le système d'équipement ultérieur comporte un corps (71) pouvant être mis sur le fond (61) du pot et ayant une cavité (69) entourant la sortie (63) d'eau du pot, espace qui forme un élément constitutif de l'espace (27) de collecte associé à l'agencement (5) de filtration et qui a l'ouverture (37) d'évacuation pour l'évacuation de l'eau de l'espace (27) de collecte.

7. Dispositif suivant la revendication 6, **caractérisé en ce que** le corps (71) est fixé sur le pot par une vis (65) creuse qui se visse avec le conduit (63) de sortie de l'eau et qui a des trous (67) pour la formation d'un passage d'eau vers la cavité (69) servant d'espace (27) de collecte.
